(19) Europäisches Patentamt
European Patent Office
Office européen des brevets

(11) **EP 3 109 969 A1**

(12) **EUROPEAN PATENT APPLICATION**
published in accordance with Art. 153(4) EPC

(43) Date of publication:
**28.12.2016 Bulletin 2016/52**

(51) Int Cl.:
***H02J 13/00*** (2006.01)

(21) Application number: **15751336.7**

(22) Date of filing: **07.01.2015**

(86) International application number:
**PCT/JP2015/000037**

(87) International publication number:
**WO 2015/125402 (27.08.2015 Gazette 2015/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.02.2014 JP 2014029895**

(71) Applicant: **Panasonic Intellectual Property Management Co., Ltd.**
**Osaka-shi, Osaka 570-6207 (JP)**

(72) Inventor: **SHIMIZU, Noriyoshi**
**Osaka 540-6207 (JP)**

(74) Representative: **Appelt, Christian W.**
**Boehmert & Boehmert**
**Anwaltspartnerschaft mbB**
**Patentanwälte Rechtsanwälte**
**Pettenkoferstrasse 20-22**
**80336 München (DE)**

(54) **APPLIANCE INFERENCE DEVICE AND PROGRAM**

(57) An object of the invention is to simply register information required for inferring an appliance. An appliance inference device (10) of the invention includes a receiver (11), a first storage (12), an analyzer (13), an inference module (14) and a second storage (15). The first storage (12) stores pieces of power information in each of which a value of electric power received by the receiver (11) is correlated with a time. When a piece of power information stored in the first storage (12) satisfies a prescribed condition, the analyzer (13) classifies the piece of power information as a group corresponding to the condition. The inference module (14) checks the piece of power information classified as the group by the analyzer (13) with appliance information stored in the second storage (15), thereby inferring the name of an electrical appliance (20) corresponding to the group. The second storage stores the appliance information, with the information correlated with the name of the electrical appliance (20).

FIG. 1

EP 3 109 969 A1

**Description**

**Technical Field**

The invention relates generally to appliance inference devices and programs and, more particularly, to an appliance inference device configured to infer a kind of operating appliance based on a value of electric power measured in an electrical circuit in which the appliance is supplied with the electric power, and a program for allowing a computer to function as the appliance inference device.

**Background Art**

There has been proposed conventional technology for inferring a kind of appliance supplied with electric power based on a measurement result obtained by measuring an electric value such as electric current, electric voltage and electric power in an electrical circuit in which the appliance is supplied with the electric power (e.g., Document 1 (JP Pub. No. 2012-175900)). Document 1 describes technology for judging a kind of electrical appliance based on a feature value obtained by measuring electric voltage and electric current supplied to the electrical appliance and then figuring out the feature value as electrical characteristics from the measured electric voltage and electric current. Here, there are eight kinds of feature values that are an effective current value, a current peak, a current kurtosis, a crest factor, a minimum power value, a current shift, a ratio of effective current value and minimum power value, and a power factor. In Document 1, an electrical appliance is judged to be an objective kind of electrical appliance when it has a minimum linear sum of squares of differences between the eight kinds of feature values and feature values stored in an appliance judging data storage.

In this sort of technology, inferring a kind of electrical appliance requires registering feature values according to kinds of electrical appliances before inferring the kind of electrical appliance. Technology for storing feature values in the appliance judging data storage is not described in Document D1 in particular, but the feature values described in Document 1 require to be measured in advance for each of kinds of electrical appliances because they cannot be obtained from specifications of the electrical appliances.

In other words, feature values of electrical appliances which have not been measured in order to obtain the feature values cannot be registered in the appliance judging data storage and therefore a kind of electrical appliance cannot be inferred. After all, the technology described in Document 1 has a problem of a time-consuming process of, whenever a new appliance to be supplied with electric power is introduced, calculating feature values for inferring the appliance to register the calculated feature values in the appliance judging data storage.

**Summary of Invention**

It is an object of the present invention to provide an appliance inference device that allows information required for inferring a kind of appliance to be registered easily. It is further an object of the present invention to provide a program for allowing a computer to function as the appliance inference device.

An appliance inference device according to an aspect of the present invention includes a receiver, a first storage, an analyzer, a second storage and an inference module. The receiver is configured to receive, from a measuring device, values of electric power conducted in an electrical circuit that an electrically-powered appliance is connected to. The first storage is configured to store pieces of power information in each of which a value of electric power received by the receiver is correlated with a time. The analyzer is configured, when a piece of power information stored in the first storage satisfies a prescribed condition, to classify the piece of power information as a group corresponding to the condition. The second storage is configured to store appliance information that contains a range of values of electric power to be consumed by the appliance, and an operable time period of the appliance, and that is correlated with a name of the appliance. The inference module is configured to check the piece of power information classified as the group by the analyzer with the appliance information stored in the second storage, thereby inferring the name of the appliance corresponding to the group.

A program according to an aspect of the present invention is a program for allowing a computer to function as the appliance inference device. The program may be provided by a computer-readable storage medium.

**Brief Description of Drawings**

FIG. 1 is a brock diagram of an embodiment;
FIG. 2 exemplifies an operation of the embodiment;

FIG. 3 illustrates a method for finding a reference value in the embodiment;
FIG. 4 illustrates a method for finding a reference value in the embodiment;
FIG. 5 illustrates a method for inferring a kind of appliance in the embodiment; and
FIG. 6 illustrates a method for inferring a kind of appliance in the embodiment.

**Description of Embodiments**

An appliance inference device in accordance with an embodiment of the present invention to be explained below is configured to infer a kind of appliance connected to an electrical circuit based on a change in values of electric power measured from the electrical circuit connected with the appliance configured to operate using electric power. That is, the embodiment to be explained below describes the technology for indirectly inferring a kind of appliance based on a change in values of electric power conducted in the electrical circuit.

Hereinafter, the appliance may be regarded to be an electrical appliance configured to mainly consume electric power in order to attain an application purpose thereof. Note that the technology in the embodiment may be applied to even appliances configured to consume electric power secondarily or incidentally such as appliances configured to consume fuel such as gas or appliances connected with water (tap water or waste water). The appliance inference device may be installed in a building mainly as dwelling, but may be installed in a building other than the dwelling.

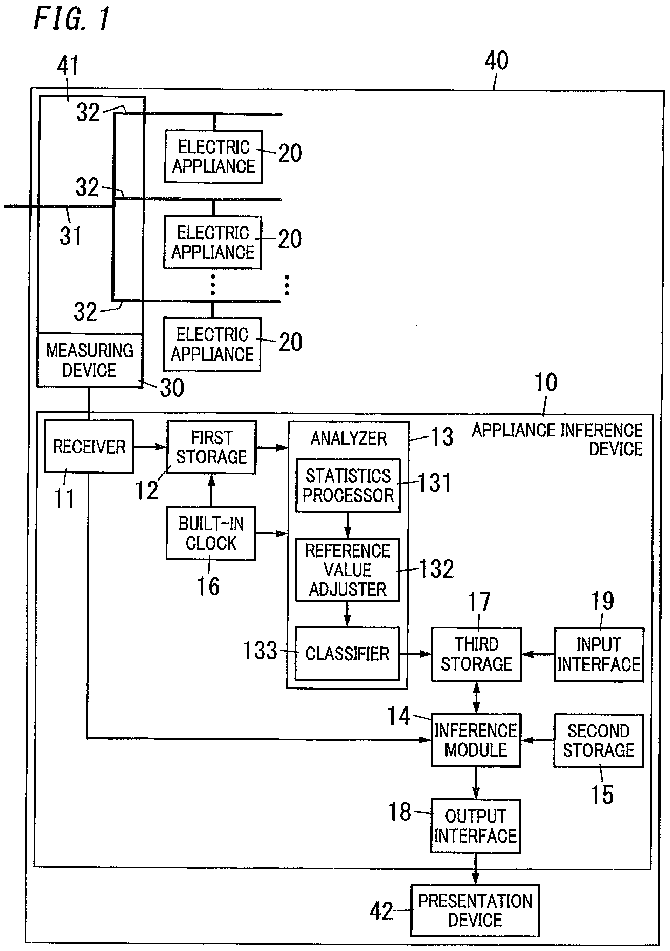

As shown in FIG. 1, an appliance inference device 10 in the present embodiment includes a receiver 11, a first storage 12, an analyzer 13, an inference module 14 and a second storage 15. The receiver 11 is configured to receive, from a measuring device 30, values of electric power conducted in an electrical circuit (a main circuit 31 and branch circuits 32) that (an) electrically-powered appliances (electrical appliances 20) (is)are connected to, where the values are values of electric power conducted to sides of the appliances. The first storage 12 is configured to store pieces of power information in each of which a value of electric power received by the receiver 11 is correlated with time. The analyzer 13 is configured, when a piece of power information stored in the first storage 12 satisfies a prescribed condition, to classify the piece of power information as a group corresponding to the condition. The inference module 14 is configured to check the piece of power information classified as the group by the analyzer 13 with appliance information stored in the second storage 15, thereby inferring the name of an appliance (an electrical appliance 20) corresponding to the group. The second storage 15 is configured to store appliance information that contains a range of values of electric power to be consumed by the appliance (the electrical appliance 20), and a time period(s) with a probability of operation of the appliance (the electrical appliance 20), and that is correlated with the name of the appliance (the electrical appliance 20).

In the appliance inference device 10 of the embodiment, desirably the analyzer 13 includes a statistics processor 131, a reference value adjuster 132 and a classifier 133. The statistics processor 131 may be configured to calculate frequency distribution in relation to values of electric power respectively contained in pieces of power information for a prescribed comparison time period, stored in the first storage 12. The reference value adjuster 132 may be configured to set a value of electric power, which is a highest frequency in the frequency distribution, to a reference value. The classifier 133 may be configured, when a difference (an absolute value of the difference) between a value of electric power and the reference value is a threshold or less as the above condition is satisfied, to classify the value of electric power as the group.

That is, it is desirable that the first storage 12 be configured to store the pieces of power information for the prescribed comparison time period. In this case, desirably the analyzer 13 includes the statistics processor 131, the reference value adjuster 132 and the classifier 133. The statistics processor 131 may calculate frequency distribution in relation to values of electric power respectively contained in the pieces of power information for the prescribed comparison time period, stored in the first storage 12. The reference value adjuster 132 may set a value of electric power, which is a highest frequency in the frequency distribution, to a reference value. When a difference between a value of electric power and the reference value is the threshold or less as the above condition is satisfied, the classifier 133 may classify the power information containing the value of electric power as the group.

In the appliance inference device 10 of the embodiment, desirably the classifier 133 is provided with a configuration below. That is, the classifier 133 may be configured, when first and second values are contained in the time series values of electric power within the comparison time period and satisfy the prescribed condition, to classify power information containing the second value after the first value in time into a group that is the same as that of power information containing the first value. Desirably, when the condition is satisfied is when the first and second values, temporally adjoining each other, has a difference that is equal to or less than the threshold compared with the reference value, and a time difference between the time correlated with the first value and the time correlated with the second value is within a judgment time.

In the appliance inference device 10 of the embodiment, desirably the electrical circuit includes the branch circuits 32 that diverge from the main circuit 31. Desirably, the measuring device 30 is configured to measure a value of electric power for each of the branch circuits 32. In this case, the analyzer 13 may be configured to allow the threshold and the judgment time to be set for each of the branch circuits 32.

The appliance inference device 10 of the embodiment may further include a third storage 17 configured to store the group extracted (classified) by the analyzer 13 and the name of the appliance (the electrical appliance 20) inferred by the inference module 14 with the group correlated with the name. In the appliance inference device 10 of the embodiment, desirably the inference module 14 is configured to calculate an event probability for each of time periods with reference to the group stored in the third storage 17 to store the event probabilities in the third storage 17.

In the appliance inference device 10 of the embodiment, desirably the inference module 14 is configured to infer (a) candidates as (a) combinations of (an) appliances correlated with a value(s) of electric power corresponding to the group when inferring the name of the appliance (the electrical appliance 20) corresponding to the group extracted (classified) by the analyzer 13. The inference module 14 is also configured to, based on an event probability for each of time periods, obtain a candidate with a maximum probability in time periods corresponding to the value(s) of electric power when different kinds of candidates are inferred.

In other words, the inference module 14 may be configured, when the different kinds of candidates are inferred, to narrow down the candidate to a candidate having a maximum probability obtained by calculating based on an event probability in at least a time period, correlated with the corresponding value of electric power, of the time periods.

The appliance inference device 10 of the embodiment may further include an input interface 19 configured to receive an estimated value of electric power for each of the time periods with respect to the electrical circuit (the main circuit 31 and the branch circuits 32) to store a value of electric power input for each of the time periods in the third storage 17. Desirably, the inference module 14 is configured, to infer (a) candidates as (a) combinations of (an) appliances ((an) electrical appliances 20) correlated with (a) values of electric power corresponding to the group based on (a) combinations of (a) values of electric power for each of the time periods when inferring a name of an appliance (an electrical appliance 20) corresponding to the group classified by the analyzer 13. The inference module 14 is also configured to, based on an event probability for each of the time periods, obtain a candidate with a maximum probability in time periods corresponding to the value of electric power when different kinds of candidates are inferred.

In other words, the inference module 14 may be configured, when the different kinds of candidates are inferred, to narrow down the candidates to a candidate having a maximum probability obtained based on an event probability in at least a time period, correlated with the corresponding value of electric power, of the time periods.

The combination candidates may include not only electrical appliances 20 but also a single electrical appliance 20. That is, the combination candidates may include only one electrical appliance 20 besides electrical appliances 20.

The appliance inference device 10 includes, as a main hardware configuration, a computer configured to run a program, thereby including functions below. In other words, the program of the embodiment allows the computer to function as the appliance inference device 10 of the embodiment. Examples of the computer include a personal computer, and a mobile terminal device such as a smart phone and a tablet terminal. The computer may integrally include a processor and a memory like a microcomputer.

The program may be stored in a ROM (Read Only Memory) or be provided through telecommunications line such as the Internet. The program may also be provided through a computer-readable storage medium.

The appliance inference device 10 of the embodiment will be hereinafter explained in detail. As shown in FIG. 1, a building 40 is provided with a distribution board 41 for distributing electric power. The distribution board 41 includes an electrical circuit 31 that allows received electric power to be conducted through, and is configured to distribute the electric power conducted through the electrical circuit 31 among electrical circuits 32. Hereinafter, the electrical circuit 31 is referred to as the "main circuit 31", and the electrical circuits 32 are referred to as the "branch circuits 32". The distribution board 41 may be a configuration for receiving electric power from only a commercial power supply of a power company, or a configuration for receiving electric power from a dispersed power source (a photovoltaic power system, a power storage system, a fuel cell system or the like) installed in the building 40.

In the distribution board 41 for a dwelling, the main circuit 31 typically includes a bus bar (a band plate made of conductive metal plate) electrically connected to a main breaker. The branch circuits 32 are divided into segments through branch breakers electrically connected to the main breaker.

The measuring device 30 is configured to measure electric power conducted in the main circuit 31 and the branch circuits 32 connected with appliances (electrical appliances 20). The measuring device 30 is configured to measure electric power conducted in each of the branch circuits 32, but may be configured to measure electric power conducted in the main circuit 31 in addition to electric power conducted in each of the branch circuits 32. The measuring device 30 may also be configured to measure only electric power conducted in the main circuit 31. This sort of measuring device 30 may have either a configuration in which it is built in the distribution board 41 or a configuration in which it is located outside the distribution board 41.

When a receptacle is provided on an electrical circuit in which electric power is supplied from each branch circuit 32 to an electrical appliance(s) 20, the measuring device 30 may be configured to measure electric power conducted through each of the receptacles.

In an example below, the measuring device 30 is configured to measure electric power conducted in each of the branch circuits 32. However, the technology to be explained below can be applied to a configuration in which the measuring device 30 is configured to measure electric power in an electric circuit other than the branch circuits 32.

Each branch circuit 32 may correspond to one or more electrical appliances 20. That is, each of some of the branch circuits 32 may correspond to one electrical appliance 20 having relatively high power consumption such as an air conditioner, an IH (Induction Heating) cooking heater or a microwave oven. In case each of some branch circuits 32 correspond to two or more electrical appliances 20, the branch circuits 32 are typically assigned for respective places (rooms) of the building 40.

The measuring device 30 may monitor electric current flowing through each of the branch circuits 32 with a Rogowski coil or a clamp current sensor to obtain a value of electric power from an integrated value of the monitored electric current and a value of voltage across lines of a corresponding branch circuit 32. That is, each value of electric power measured by the measuring device 30 is not instantaneous electric power in fact but electric energy per unit time. The unit time is selected from, e.g. a range of 30 seconds to ten minutes, and is desirably a time such as 30 seconds or one minute. Instantaneous electric power of each branch circuit 32 may vary over time even within unit time, but the variation of instantaneous electric power within unit time is not considered. The value of electric power in the embodiment is integral electric energy for unit time. The value of electric power is equivalent to an average value of electric power for unit time. That is, the value of electric power is a value obtained by dividing integral electric energy for unit time by the unit time.

The appliance inference device 10 includes the receiver 11 configured to receive a value of electric power measured for each of the branch circuits 32 through the measuring device 30. The first storage 12 is configured to store pieces of power information, each of which is information containing a value of electric power and date and time, obtained by correlating a value of electric power received by the receiver 11 from the measuring device 30 with date and time. The date and time is measured by a built-in clock 16 such as a real-time clock built in the appliance inference device 10. The pieces of power information contain a value of electric power measured every unit time by the measuring device 30 and date and time measured by the built-in clock 16 at a time point when the value of electric power is received by the receiver 11.

The first storage 12 desirably has capacity for storing pieces of power information for at least one day, or may have capacity for storing pieces of power information for a time period selected from a week, a month, a year and the like. The first storage 12 stores pieces of power information for each of the branch circuits 32, and accordingly stores a history of change in values of electric power for each of the branch circuits 32.

The appliance inference device 10 is configured to infer a kind(s) of electrical appliance(s) 20 connected to each of the branch circuits 32 based on a history of change in values of electric power for each of the branch circuits 32 stored in the first storage 12. The kind(s) of electrical appliance(s) 20 is(are) inferred based on pieces of power information for the prescribed comparison time period. In the explanation below, the prescribed comparison time period is set to one day.

The prescribed comparison time period can be voluntarily selected from a range of the capacity of the first storage 12. However, too short comparison time period causes difficulty in inferring the kind(s) of electrical appliance(s) 20 owing to less information, and it is therefore desirable that the comparison time period be a half day or more. On the other hand, too long comparison time period may cause variation of values of electric power owing to seasonal influence and the like to increase conditions for determining the value of electric power, and it is therefore desirable that the comparison time period be limited by an upper limit such as about one month. When the comparison time period includes two or more days, it is desirable that weekdays be distinguished from holidays and that seasons and the like be considered.

The appliance inference device 10 of the embodiment is configured to represent a name as a kind of electrical appliance 20 inferred. The appliance inference device 10 accordingly includes the second storage 15 configured to store the name of the electrical appliance 20 correlated with appliance information in advance. The appliance information contains a range of values of power consumption to be described later for an operational time period of an electrical appliance 20, a name of a branch circuit 32 connected with the electrical appliance 20, and operational time periods of the electrical appliance 20, which are correlated with a name of the electrical appliance 20. As stated below, the appliance information is set based on specifications of the electrical appliances 20 provided from manufacturers or dealers of the electrical appliances 20, respectively, common knowledge, disclosed statistical data and the like.

The appliance inference device 10 includes the analyzer 13. The analyzer 13 is configured to extract operational time periods in each of which a value of electric power increases according to the operation of an electrical appliance 20 based on pieces of power information within the comparison time period of the pieces of power information stored in the first storage 12. The analyzer 13 classifies, as a group, a value of electric power for each of the extracted operational time periods within the comparison time period.

The analyzer 13 includes the statistics processor 131, the reference value adjuster 132 and the classifier 133, and classifies a value of electric power (a piece of power information) within the comparison time period as the group. The functions of the statistics processor 131, the reference value adjuster 132 and the classifier 133 will be explained later.

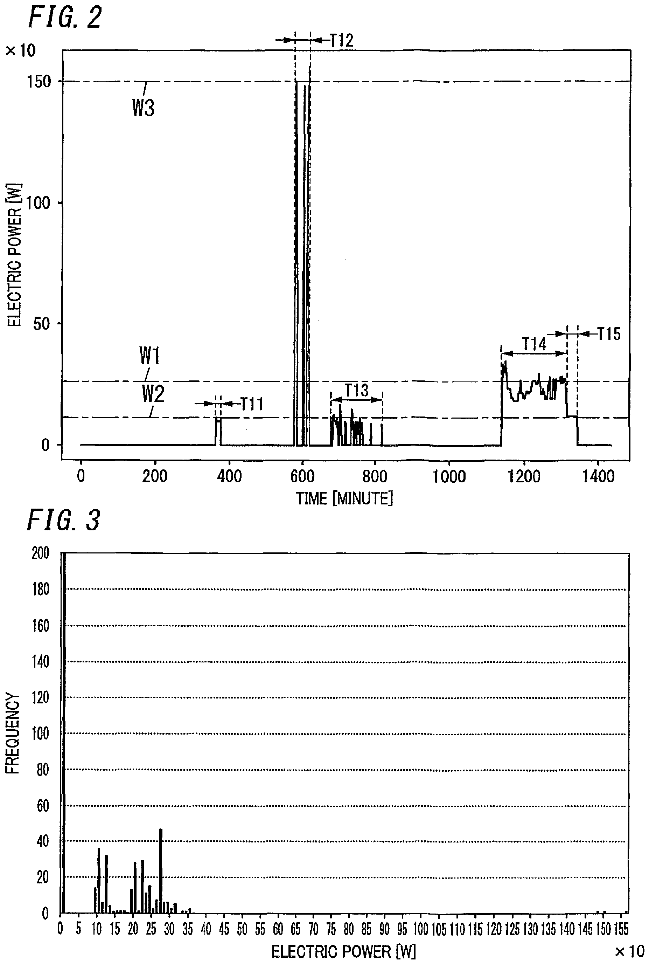

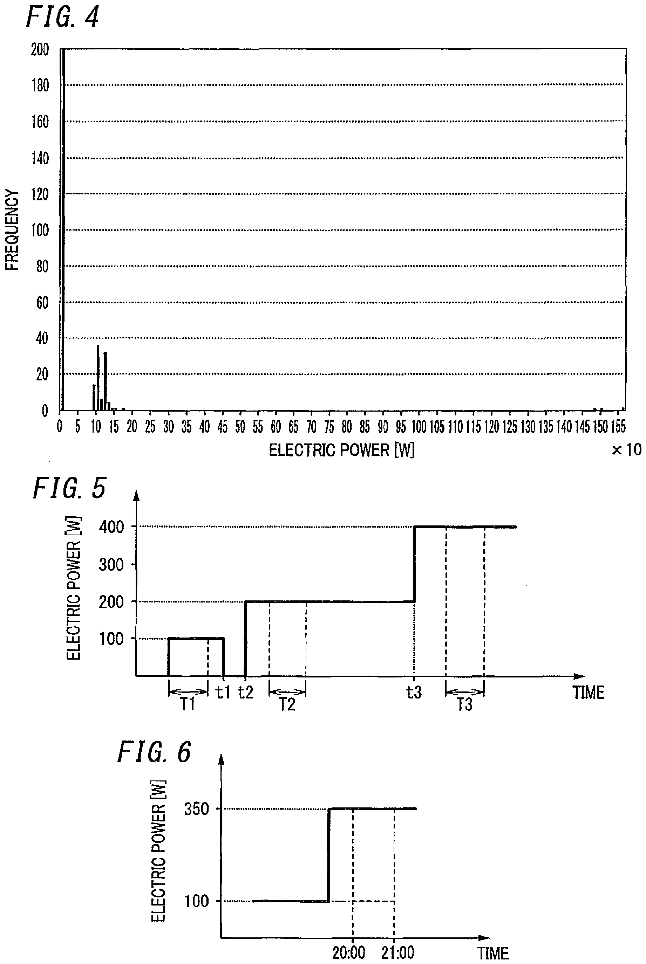

An example in which values of electric power for the comparison time period stored in the first storage 12 change as shown in FIG. 2 will be explained (a time period from an left end to a right end in FIG. 2 corresponds to the comparison time period). The comparison time period shown in FIG. 2 is one day, in which the unit time for receiving a value of electric power is one minute. A horizontal axis of FIG. 2 shows time of which unit is a minute, and the comparison time period has a length of 1440 minutes. The unit of a vertical axis of FIG. 2 is 10 [W]. Each numerical value on the vertical axis of FIG. 2 therefore shows a value of one-tenth of a practical numerical value. In FIGS. 3 and 4 to be described below, each unit of their horizontal axes is 10 [W] as well.

In FIG. 2, five time periods can be visually regarded as a duration in which a condition having almost the same values of electric power continues within the comparison time period (see time periods T11 to T15 in FIG. 2). Three time periods of the five time periods have almost the same values of electric power except of 0 [W]. That is, FIG. 2 includes three groups that have values of electric power different form each other. The appliance inference device 10 in the embodiment infers an electrical appliance 20 from values of electric power within the comparison time period based on prediction that a duration in which a condition having almost the same values of electric power except of 0 [W] continues can be correlated with an electrical appliance 20. In the example of FIG. 2, since the three groups have values of electric power different form each other, it is possible to infer with a high probability that three kinds of electrical appliances 20 receive electric power from a corresponding branch circuit 32.

Standby power consumption may occur for a time period in which no electrical appliance 20 operates substantially, but the standby power consumption is regarded as 0 [W] for simplicity in the embodiment. In the explanation below, when standby power consumption occurs for a time period in which an electrical appliance(s) 20 connected to a branch circuit 32 is(are) out of operation, a condition in which electric power conducted in the branch circuit 32 is 0 [W] means a condition in which the electric power conducted is the standby power consumption or less. In short, a condition in which electric power required for operation for main application purpose of the electrical appliance(s) 20 is not conducted is represented as 0 [W].

The analyzer 13 is to extract the three groups when values of electric power change as shown in FIG. 2. The analyzer 13 may recognize the groups based on a condition that values of electric power (except of 0 [W]) in each group have relatively a small range of variation.

In addition, a duration in which values of electric power W(t) that belongs to one group occurs continuously is regarded as a duration in which an electrical appliance(s) 20 corresponding to the group operates continuously. The duration in which the values of electric power W(t) except of 0 [W] occurs continuously may be not only a duration in which the values of electric power W(t) occurs continuously, but also a duration in which corresponding values of electric power W(t) occurs intermittently. When the values of electric power W(t) that belongs to one group occurs intermittently, a time interval which the analyzer 13 regards as a corresponding electrical appliance(s) 20 operating continuously is limited to a relatively short judgment time (e.g., 30 minutes or less).

As stated above, the analyzer 13 recognizes one group based on values of electric power W(t). In addition, when values of electric power W(t) that belong to the same group occurs intermittently, the analyzer 13 is also based on a condition of time interval which each of the values of electric power W(t) occurs at. In other words, the analyzer 13 classifies a value of electric power W(t) as a group based on a change degree of the value of electric power W(t) as a condition and, in the group, determines a duration in which an electrical appliance(s) 20 operates continuously base on, as a condition, a time in which values of electric power W(t) occur. A set of values of electric power W(t) corresponding to a duration in which an electrical appliance(s) 20 operates continuously is hereinafter called (a) subgroups. That is, a group includes one or more subgroups.

In the example of FIG. 2, a duration (a duration T14) in which a state of about 300 [W] continues is found visually, and three durations (durations T11, T13 and T15) in each of which a state of about 100 [W] continues are found visually. In the example of FIG. 2, a duration (a duration T12) in which a state of about 1500 [W] continues is further found visually. Therefore, when values of electric power W(t) change as shown in FIG. 2, the analyzer 13 requires extracting the three groups of about 300 [W], 100 [W] and 1500 [W] and further extracting three subgroups from the group of about 100 [W].

In order to extract a group, the analyzer 13 determines a reference value Wi (i: a positive integer) as a representative value of the group. Since a reference value Wi for each of groups is determined, three reference values W1, W2 and W3 are determined in the example of FIG. 2 where the three groups exist.

In the embodiment, a reference value Wi is determined based on an occurrence frequency of values of electric power W(t) within the comparison time period. In order to determine the reference value Wi, the statistics processor 131 provided in the analyzer 13 calculates frequency distribution in relation to values of electric power W(t) within the comparison time period. That is, the statistics processor 131 classifies each value of electric power W(t) within the comparison time period into 10 [W] sections, and calculates an occurrence frequency of values of electric power W(t) in each of the sections.

In the embodiment, a lower limit of values of electric power in each section is employed as a value of the section. For example, 270 [W] is employed as a value of the section that is 270 [W] or more and lower than 280 [W]. Each value of the sections for classifying values of electric power W(t) is not limited to 10 [W], but may be another value selected from 5 [W], 15 [W], 20 [W] and the like.

The statistics processor 131 calculates frequency distribution in relation to values of electric power W(t) within the comparison time period. Based on the frequency distribution, the reference value adjuster 132 provided in the analyzer 13 then sets a value of a section that is a maximum frequency value (a value of a section with a maximum frequency) as a reference value W1 of one group. FIG. 3 shows an example of the frequency distribution in FIG. 2. A value of a section with the maximum frequency value is 270 [W], and accordingly the reference value W1 is set to 270 [W].

When one reference value W1 is set, the classifier 133 extracts (a) values of electric power W(t), near to the reference value W1, of the values of electric power W(t) for the comparison time period based on the reference value W1 to classify them as a first group. The classifier 133 further calculates a duration in which the values of electric power W(t) near to the reference value W1 occur continuously, and finds subgroups when the group can be divided into the subgroups. Though the group may include (a) durations of 0 [W], the analyzer 13 considers that an electrical appliance(s) 20 operates continuously when each of time intervals at which values of electric power W(t) with almost the same level occur is the above judgment time or less,.

The classifier 133 obtains appearing and disappearing time points of the group when the group cannot be divided into subgroups, but obtains appearing and disappearing time points of each subgroup when it can be divided into subgroups. In short, the classifier 133 determines a time period in which a group appears.

If extracting the group, the classifier 133 extracts values of electric power W(t) in a time period in which the group appears, and excludes (a) sections including the values of electric power W(t) from the frequency distribution calculated by the statistics processor 131. In the embodiment, as shown in FIG. 4, the sections of 160 [W] and 190 to 350 [W] are excluded. The statistics processor 131 calculates frequency distribution exclusive of the values of electric power W(t) that belong to the first group obtained through the classifier 133. The reference value adjuster 132 sets a maximum frequency value in the frequency distribution as a second reference value W2. In FIG. 4, a value of a section with the maximum frequency value is 100 [W], and accordingly the reference value W2 is set to 100 [W].

If the reference value W2 is set, the classifier 133 finds a group corresponding to the reference value W2 and obtains appearing and disappearing time points of the group. When the group can be divided into subgroups, the classifier 133 obtains appearing and disappearing time points of each subgroup. The analyzer 13 repeats the process as stated above, thereby extracting groups one by one from values of electric power W(t) within the comparison time period. The analyzer 13 repeats the aforementioned process until no group cannot be extracted from the values of electric power W(t) for the comparison time period.

After values of electric power W(t) in one group are excluded, when sections in the frequency distribution have the same frequency and the frequency of the sections is larger than those of other sections, it is determined whether or not to be classified as a group according to the continuous number of sections having the frequency of 0. For example, if the frequency distribution includes 10 (100 [W]) or more sections having the frequency of 0, the classifier 133 judges two sections to be different groups, where the sections having the frequency of 0 intervene between the two sections which include values of electric power W(t).

Thus, if the groups are separated, the classifier 133 judges whether or not a maximum frequency value can be uniquely determined for each of the groups. When a maximum frequency value can be determined uniquely, the classifier 133 sets a value of a section with the maximum frequency value to a reference value. On the other hands, when no maximum frequency value can be determined uniquely in the separated groups, a value of a section having a maximum frequency value nearest to a center value in the groups is set to a reference value. In the example of FIG. 2 where W1=270 [W], W2=100 [W] and W3=1500 [W], the group obtained based on the reference value W2 is divided into the three subgroups.

In short, the analyzer 13 is configured, when one group is extracted, to exclude values of electric power W(t) in the group to further extract a group from remaining values of electric power W(t). In other words, the classifier 133 performs recursive process so that groups are extracted one by one from values of electric power W(t) within the comparison time period and values of electric power W(t) of the extracted group are excluded and a remaining group(s) is(are) extracted.

In the operation described above, the analyzer 13 finds groups by calculating a difference between each value of electric power W(t) and a reference value W1-W3, and calculates a time period in which values of electric power W(t) occur for each of the groups to find a duration in which an electrical appliance(s) 20 operates.

For example, if a difference between a selected reference value (any one of the reference values W1 to W3) and each value of electric power W(t) is the threshold of less, it is judged that the value of electric power W(t) belongs to a group corresponding to the reference value W1. When the difference is an absolute value thereof, the analyzer 13 calculates |W(t)-W1| as the difference. When the difference is the threshold or less, the analyzer 13 judges that a corresponding value of electric power W(t) belongs to the group corresponding to the reference value W1.

The analyzer 13 calculates a time difference between occurrence times of adjoining two values of electric power W(t) of values of electric power W(t) that belong to the group (every adjoining two values of electric power W(t)), and if the time difference is within the judgment time, judges that an electrical appliance(s) 20 operates continuously. For example, in one group, a time difference (t2-t1) is calculated from a value of electric power W(t1) correlated with a time point t1 and a value of electric power W(t2) correlated with a time point t2 (>t1). If the time difference (t2-t1) is within the aforementioned judgment time, it is judged that the value of electric power W(t1) and the value of electric power W(t2) are in a duration in which an electrical appliance(s) 20 operates continuously.

In the operational example described above, when the group includes subgroups, the analyzer 13 is to find the subgroups after determining the group. When performing the process to be explained below, the analyzer 13 is to first determine values of electric power W(t) that belong to each subgroup and then determine the group based on a relation between a value of electric power W(t) and a reference value W1-W3.

That is, the analyzer 13 calculates occurrence order based on each value of electric power W(t) within the comparison time period and Expression 1, and judges that the value of electric power W(t) belongs to the same subgroup when a condition shown by Expression 1 is satisfied.

$$\text{(Expression 1)}$$

$$|\,W(tj) - Wi\,| \leq Wd$$

and

$$|\,tj - t(j-1)\,| \leq Td$$

In Expression 1, j is a positive integer that represents order, Wd is a threshold of a difference regrading a value of electric power, and Td represents the judgment time. A reference value Wi is determined in the same way as the operational example described above even in the case of the condition by Expression 1. In the embodiment, an example in which the reference value Wi is the reference value W1 will be explained.

When groups are determined based on the condition by Expression 1, the analyzer 13 is based on a first condition that a difference between each value of electric power W(tj) within the comparison time period and the reference value W1 is the threshold Wd or less. Satisfying the first condition means that the value of electric power W(tj) at a time point tj has a possibility that it belongs to the group corresponding to the reference value W1. In Expression 1, a difference of the value of electric power is an absolute value of the difference between the value of electric power W(tj) and the reference value W1.

Whether or not an electrical appliance(s) 20 corresponding to the value of electric power W(tj) operates continuously is judged based on a second condition. The analyzer 13 is based on the second condition that a time difference is within the judgment time Td, where the time difference is a difference between the time point tj correlated with the value of electric power W(tj) and a time point t(j-1) correlated with a value of electric power W(t(j-1)) immediately before the time point tj and the value of electric power W(tj) and the value of electric power W(t(j-1)) satisfy the first condition. In Expression 1, the time difference is an absolute value of a difference between the time point tj and the time point t(j-1).

When the value of electric power W(tj) satisfying the first condition satisfies the second condition, the classifier 133 judges that the value of electric power W(tj) constitutes the same subgroup as that of the value of electric power W(t(j-1)) correlated with the time point t(j-1). Thus, it calculates a difference between each value of electric power W(t) within the comparison time period and a reference value Wi and also calculates a time difference with respect to a time point correlated with each value of electric power W(t) within the comparison time period, thereby judging whether or not subgroups exist. An appearing time point of a subgroup is obtained from a time point correlated with a value of electric power W(t) that first satisfies the condition by Expression 1. A disappearing time point of the subgroup is obtained from a time point when the value of electric power W(t) constituting the subgroup comes to violate the condition by Expression 1.

The threshold Wd and the judgment time Td can be commonly set to all of the branch circuits 32. Different electrical appliances 20 are connected to different branch circuits 32 in general. It is therefore desirable that the threshold Wd and the judgment time Td can be set for each of the branch circuits 32.

A value of electric power (tj) at an appearing time point of a subgroup is not followed by a value electric power W(t(j-1)) immediately before the appearing time point. The analyzer 13 is therefore based on only the first condition of Expression 1 until a first value of electric power W(tj) of a subgroup is detected. After a value of electric power W(tj) satisfying the first condition is detected, the analyzer 13 extracts subgroups based on the first and second conditions.

If the comparison time period contains only one subgroup, the subgroup is equivalent to a group. On the other hand, if the comparison time period contains two or more subgroups, the subgroups have a possibility of constituting one group. The analyzer 13 may be therefore configured, when two or more subgroups are extracted based on the first condition and the same reference value Wi for the comparison time period, to treat the two or more subgroups as one group.

Desirably, at least one of the threshold Wd and the judgment time Td can be set for each of the branch circuits 32. If the threshold Wd is set to a small value, resolution is increased to the values of electric power W(t). By adjusting the judgment time Td, it is possible to accurately judge whether or not an electrical appliance(s) 20 connected to a branch circuit 32 operates continuously according to an operational feature(s) thereof.

For example, when the threshold Wd is set to 50 [W] and a reference value is Wi, a value of electric power W(t) in a range of Wi-50 [W] $\leq$ W(t) $\leq$ Wi+50 [W] is treated as a group candidate. That is, a group can be classified by unit of 100 [W]. Similarly, when the threshold Wd is 100 [W], a group can be classified by unit of 200 [W].

Thus, the threshold Wd is adjustable so that a threshold Wd of a branch circuit 32 for a living room with a high possibility to be connected with two or more electrical appliances 20 is set to a small value and so that a threshold Wd of a branch circuit 32 for a kitchen to be connected with a small number of electrical appliances 20 is set to a large value.

When an electrical appliance 20 is an appliance configured to be turned on and off repeatedly in operation like a toaster or an iron, the judgment time Td is set to a relatively long time, whereby it is possible to judge whether or not the electrical appliance 20 operates continuously even if it is turned on and off repeatedly. On the other hand, when an electrical appliance 20 is an appliance without a large variation in values of electric power W(t) thereof in operation like a television set (hereinafter referred to as a "TV") or a light fixture, the judgment time Td is set to a relatively short time, whereby a kind of electrical appliance 20 can be judged easily.

The conditions by Expression 1 are one example. As stated above, another condition for extracting a group or subgroups may be used, such as a condition that subgroups are classified after the group is obtained.

The analyzer 13 is configured to extract a group or subgroups based on values of electric power W(t) stored in the first storage 12 and further determine appearing and disappearing time points for each of the subgroups. The embodiment treats each group as an electrical appliance(s) 20 and regards the electrical appliance(s) 20 in operation from an appearing time point to a disappearing time point of a subgroup (a group in the case of only one subgroup). After determining a group, the analyzer 13 calculates a value of electric power of the group. The value of electric power is hereinafter referred to as "power consumption".

The power consumption is a value of electric power in operation of an electrical appliance(s) 20 and may therefore vary over time. The power consumption can be therefore represented by any of a variation rage thereof and a representative value of the variation rage. The representative value of the variation rage may be selected from an average of maximum and minimum values of electric power in a group, a center value of values of electric power in the group, an average of values of electric power in the group, and a reference value for determining the group. When a value of electric power other than the reference value is used for the power consumption, if 0 [W] is contained in values of electric power in the group, the analyzer 13 calculates power consumption from the values of electric power in the group from which 0 [W] is excluded. On the other hand, in the case of the variation rage, upper and lower limits of the variation rage may be appropriate upper and lower limits decided to include maximum and minimum values of values of electric power in the group and the representative value.

As can be seen from the aforementioned explanation, the analyzer 13 is configured to, for each of the branch circuits 32, extract a group(s) corresponding to an electrical appliance(s) 20 that is(are) regarded as operating, calculate start and stop time points of operation of the electrical appliance(s) 20, and further calculate power consumption thereof. The calculated results by the analyzer 13 are temporarily stored in the third storage 17. The inference module 14 infers an operation state of the electrical appliance(s) 20 for each of the branch circuits 32 based on pieces of information stored in the third storage 17, and stores the inferred results in the third storage 17.

As shown in Table 1, one record comprised of five items stored in the third storage 17 includes a name given for each of the branch circuits 32, a name given for each of the groups extracted based on values of electric power for each of the branch circuits 32, power consumption, an event probability every time period, and a kind of an electrical appliance 20. An identifier (key) for identifying each record may be a combination of a name of a corresponding branch circuit 32 and a name of a corresponding group. Each of the names of the branch circuits 32 and the groups may be a number or a code. For example, a name of a branch circuit 32 is set to "Living Room" or the like, and a name of a group is set to "G1" or the like. In this case, the key of the record may be represented as "Living Room G1". Different branch circuits 32 may have the same group name. In the embodiment, "G1" is given to a group first recognized from pieces of power information within the comparison time period, and respective names are given to other groups in order of "G2", "G3", ....

(Table 1)

| Branch Circuit | Group | Power Consumption [W] | Event probability [%] | | | | | | Inferred Electrical Appliance |
|---|---|---|---|---|---|---|---|---|---|
| | | | 0-1 | ... | 18-19 | 20-21 | ... | 23-24 | |
| Living Room | G1 | 50-100 | 50 | ... | 80 | 90 | | 70 | Light Fixture |
| Living Room | G2 | 150-250 | 20 | ... | 30 | 90 | | 60 | TV |
| Living Room | G3 | 350-500 | 20 | ... | 40 | 50 | | 40 | Heating Unit |
| Kitchen | G1 | 60-80 | 10 | ... | 80 | 50 | | 10 | Light Fixture |
| Kitchen | G2 | 800-1500 | 0 | ... | 50 | 50 | | 10 | Microwave Oven |
| ... | ... | ... | ... | ... | ... | ... | ... | ... | ... |

In Table 1, power consumption is represented by a variation range, and a value thereof is obtained by rounding less than 10 [W]. Any of rounding off, rounding up and rounding down is used for the rounding less than 10 [W].

In the embodiment, the comparison time period is set to one day. The analyzer 13 daily calculates a value of power consumption for each of combinations of a branch circuit 32 and a group. Time periods in each of which an electrical appliance(s) 20 of a corresponding group is(are) operated may often differ from each other between individual comparison time periods (e.g., comparison time periods of first and second days when the comparison time period is one day). It is however considered that values of power consumption of a branch circuits 32 in such individual comparison time periods do not have a large variation when the same electrical appliance(s) 20 receives electric power from the branch circuits 32. In such individual comparison time periods, even if a collection of values of electric power occurs in each of different time periods, the inference module 14 regards the collections as the same group when respective values of power consumption are almost the same as each other in one branch circuit 32.

The inference module 14 may use, as a condition for regarding the collections as the same group, a time from an appearing time point to a disappearing time point of values of electric power in each of the collections along with a corresponding value of power consumption. That is, based on a time from an appearing time point to a disappearing time point of values of electric power in each of the collections, the inference module 14 may be configured, when a difference between the times obtained from the two collections is within a tolerance, to judge that the two collections correspond to the same electrical appliance(s) 20.

As stated above, when it is judged that the collections correspond to the same electrical appliance(s) 20, time periods corresponding to the collections are found. The inference module 14 has time periods into which the comparison time period is divided in advance. Each time period in the embodiment is set to a time period selected from one hour, three hours, six hours and the like. In the example of Table 1, each time period is set to a unit of time period that is one hour from the hour to the next hour. For example, "18-19" in Table 1 means a period of one hour from 18:00 to 19:00.

The inference module 14 puts a time period, in which a group is present, into a predetermined time period, thereby calculating an event probability for each of the time periods. In the embodiment, since the comparison time period is one day, the event probability is calculated as a ratio of days, in each of which a group is present in a corresponding time period, to days to be calculated (a percentage). If the comparison time period has a length exclusive of one day, the event probability can be calculated as a ratio of a quantity, which a group is present in a corresponding time period, to the number of the comparison time periods to be used for calculation (a percentage).

Since a group corresponds to an electrical appliance(s) 20, the same group may be present for the comparison time period twice or more. There is a possibility that the same electrical appliance 20 is operated twice or more a day when the electrical appliance 20 is, e.g. a microwave oven because it may be used for preparation for breakfast and for preparation for dinner. Therefore, two or more time periods with a high event probability may occur for one day as the comparison time period depending on a kind of electrical appliance 20. In Table 1, "Heating Unit" is selected from an electric carpet, electric radiant heater and the like. Table 2 to be described later is likewise.

Almost appearing and disappearing time points of each group occur at timing exclusive of the hour. It is therefore desirable that when an event probability is calculated for each of the time periods, if a group appears or disappears in a time period, the time period is included in a time period in which the group is present.

Days to be calculated are, for example 10 days. In this case, a corresponding event probability may be calculated based on pieces of information for past ten days from a time point that the event probability is calculated. Therefore, each event probability is to be renewed daily. If one group is present in a particular time period for nine days when an event probability is calculated based on corresponding pieces of power information for ten days, the event probability in the particular time period is 90% (=9 days/10 days × 100%).

As stated above, if the event probabilities are renewed daily, the event probabilities can reflect seasonal variation. That is, if the event probabilities are calculated as stated above, the event probabilities dynamically vary over day after day and therefore the event probabilities can vary according to seasonal variation of usage states of the electrical appliances 20.

On the other hand, in the case where the event probabilities are set in a fixed manner (i.e., the event probabilities are dynamically varied over day after day), it is necessary to calculate event probabilities per season based on seasonal usage states of the electrical appliances 20. For example, when an electrical appliance 20 is an indoor light fixture, turn-on times thereof differ between summer and winter. When an electrical appliance 20 is an outdoor light fixture (a gate light or the like), turn-on and turn-off times thereof differ between summer and winter. That is, since an event probability for each of the time periods changes between summer and winter, it is desirable that the event probabilities be calculated per season.

It is also desirable that the event probabilities be calculated with weekdays distinguish from holidays because there is a high possibility that a time period(s) of operation of an electrical appliance(s) 20 differs between weekdays and holidays and the event probabilities may have lower reliability based on pieces of information on both weekdays and holidays. By distinguishing between weekdays and holidays, the technology in the embodiment can be applied to even the case where TV is not viewed in the daytime on weekdays but is viewed in the daytime on holidays.

Note that the embodiment is based on dwellers' life habits without large variation. The technology in the embodiment applied to the case of remarkably irregular life habits is not considered.

As can be seen from Table 1, kinds of electrical appliances 20 inferred by the inference module 14 are stored in the third storage 17. The inference of the kinds of electrical appliances 20 by the inference module 14 requires the appliance information stored in the second storage 15. The appliance information stored in the second storage 15 is existing information and contains contents as shown in an example of Table 2. That is, the second storage 15 stores four pieces of information combined with each other, which include respective names of electrical appliances 20, a range of power consumption in operation for each of the electrical appliances 20, a name of a branch circuit 32 connected with each of the electrical appliances 20, (an) operational time periods for each of the electrical appliances 20.

(Table 2)

| Electrical appliance | Power Consumption [W] | Branch Circuit | Operational Time Period |
|---|---|---|---|
| TV | 100-500 | Living Room Japanese-style Room Western-style Room | Weekday: 6:00-8:00, 12:00-13:00, 19:00-22:00 Holiday: 7:00-13:00, 18:00-22:00 |
| Light Fixture (Ceiling) | 50-100 | Living Room Japanese-style Room Western-style Room | Spring, Summer, Fall: 6:00-7:00, 18:00-24:00 Winter: 6:00-8:00, 17:00-24:00 |
| Light Fixture (Pendant) | 40-80 | Dining Kitchen | Spring, Summer, Fall: 6:00-7:00, 18:00-21:00 Winter: 6:00-8:00, 17:00-21:00 |
| Microwav e Oven | 800-1500 | Kitchen | 6:00-8:00, 12:00-13:00, 18:00-19:00 |
| Heating Unit | 200-800 | Living Room Japanese-style Room Western-style Room | Winter: 6:00-8:00, 17:00-23:00 |
| ... | ... | ... | ... |

A range of a value of electric power for each of the electrical appliances 20 in the pieces of appliance information stored in the second storage 15 is obtained from a specification of a corresponding electrical appliance 20 provided by a manufacturer or a dealer thereof. Operational time periods of the electrical appliances 20 and the branch circuits 32 connected with the electrical appliances 20 are set based on common knowledge, disclosed statistical information and the like. Social life data survey by Statistics Bureau of Ministry of Public Management and the like can be employed as the disclosed statistical information. As shown in Table 2, desirably, the pieces of appliance information stored in the second storage 15 are separated between weekdays and holidays, and also separated per season.

The pieces of information as shown in Table 2 are stored in the second storage 15. In this case, the inference module 14 checks the names of the branch circuits 32, the values of power consumption and event probabilities stored in the third storage 17 with the pieces of appliance information stored in the second storage 15. The inference module 14 checks a branch circuit 32 and a value of power consumption for each of the records of the third storage 17 with the pieces of appliance information stored in the second storage 15, and extracts information containing the branch circuit 32 and the value of electric power from the second storage 15. The inference module 14 further judges whether or not (an) operational time periods of the information extracted from the second storage 15 in accordance with the record of the third storage 17 include(s) a time period with a maximum event probability in the record. If the time period with the maximum event probability is included in the operational time periods, the inference module 14 extracts a name of an electrical appliance 20 corresponding to the information from the second storage 15.

The name of the electrical appliance 20 stored in the third storage 17 is determined by the aforementioned process. Two or more time periods with a maximum event probability may be present in one record of the third storage 17. For example, the electrical appliance 20 of the microwave oven may be operated for preparation for breakfast and for preparation for dinner. In this case, at least two time periods may have the same event probability. The electrical appliance 20 of a light fixture is often operated over two or more time periods. In this case, two or more time periods may have the same event probability.

Even in these cases, the inference module 14 checks such time periods with the pieces of appliance information stored in the second storage 15, thereby judging whether or not a time period with a maximum event probability is included in the operational time periods of the second storage 15. In this case, it is desirable that all of the time periods with the maximum event probability be included in the operational time periods of the second storage 15. However, the inference module 14 may be configured, when a predetermined rate or more (e.g., 80% or more) of a time period(s) is(are) included in an operational time period(s) of the second storage 15, to judge that the time period(s) in a record of the third storage 17 is(are) included in the operational time period(s).

There is a possibility that the inference module 14 cannot determine an electrical appliance(s) 20 uniquely even if checking contents of the third storage 17 with the pieces of appliance information stored in the second storage 15. In this case, it is desirable that combination candidates of electrical appliances 20 be stored in the third storage 17.

In the case where two or more electrical appliances 20 are connected with one branch circuit 32, the two or more electrical appliances 20 may operate in the same time period(s). The case where such an event occurs will be hereinafter explained.

In an example, pieces of power information stored in the first storage 12 relate to a branch circuit 32 for "Living Room" and change as shown in FIG. 5. An electrical appliance(s) 20 is(are) also inferred on holiday in winter. FIG. 5 schematically represents the pieces of power information, and a value of electric power in each group is not two values of maximum and minimum values but one value. That is, in the example of FIG. 5, a value of electric power till a time point t1 is 100 [W], a value of electric power from a time point t2 to a time point t3 is 200 [W], and a value of electric power after a time point t3 is 400 [W]. A value of electric power from the time point t1 to the time point t2 is 0 [W] and therefore no electrical appliance 20 is operated as stated above.

When values of electric power change as shown in FIG. 5, the analyzer 13 classifies the values of electric power as three groups. The inference module 14 therefore infers respective electrical appliances 20 corresponding to the three groups. In this example, the time point t1 is 7:15, the time point t2 is 7:50, and the time point t3 is 10:20.

From Table 2, an electrical appliance 20 of 100 [W] in the living room on holiday in winter is a TV or a light fixture (ceiling), and the inference module 14 obtains a TV and a light fixture (ceiling) as candidates of the electrical appliance 20. Since the time periods in the third storage 17 are divided every one hour, a time period T1 of 6:00 to 7:00 before the time point t1 (7:15) is considered. The time period T1 of 6:00 to 7:00 on holiday in winter is not included in the operational time period of TV and therefore the inference module 14 infers that the electrical appliance 20 is the light fixture (ceiling). That is, it is inferred that the group before the time point t1 (7:15) corresponds to the light fixture (ceiling) and a value of power consumption of the light fixture (ceiling) in the living room is 100 [W].

Similarly, a time period T2 of 8:00 to 9:00 of a time period from the time point t2 (7:50) to the time point t3 (10:20) is considered. A value of electric power thereof is 200 [W] and therefore the inference module 14 obtains TV and heating unit as candidates of the electrical appliance 20. An electrical appliance 20 to be operable from 8:00 to 9:00 in the living room on holiday in winter of the TV and the heating unit is the TV according to the pieces of appliance information stored in the second storage 15. The inference module 14 therefore infers that the electrical appliance 20

corresponding to the group, a value of electric power of which is 200 [W], is the TV That is, it is inferred that the group from the time point t2 (7:50) to the time point t3 (10:20) corresponds to the TV and a value of power consumption of the TV in the living room is 200 [W].

A value of electric power in a time period T3 of 11:00 to 12:00 after the time point t3 (10:20) is 400 [W]. The value of power consumption of the electrical appliance(s) 20 corresponds to the TV and the heating unit. In this example, a result that the value of power consumption of the TV in the living room is 200 [W] has been already obtained. In this case, a state in which only the TV is operated in the branch circuit 32 for the living room is excluded, but the heating unit remains as a non-combined candidate of the electrical appliance 20. Since the value of electric power is 400 [W], other combination candidates are present when electrical appliances 20 are supplied with electric power from the branch circuit 32 for living room. The candidates include a combination of two TVs, a combination of two light fixtures (ceiling) and a TV, and a combination of four light fixtures (ceiling). That is, the inference module 14 extracts four kinds of candidates as combinations of (an) electrical appliances 20.

In the example, only the TV of the TV, the light fixture (ceiling) and the heating unit includes the time period T3 of 11:00 to 12:00 in corresponding operational time periods. Therefore, the combinations including the light fixture (ceiling) and the heating unit are excluded from the candidates as the combinations of (an) electrical appliances 20. The inference module 14 therefore infers that (an) electrical appliances 20 operated after the time point t3 (10:20) are two TVs. That is, the inference module 14 obtains the combination of two TVs from the candidates as the combinations of (an) electrical appliances 20.

In the example of FIG. 5 stated above, the inference module 14 infers that the lighting (ceiling) is operated until the time point t1, one TV is operated from the time point t2 to the time point t3, and two TVs are operated after the time point t3. The inferred result is correlated with a record for each of the groups in the third storage 17 and stored therein.

When two or more electrical appliances 20 are operated as shown after the time point t3 in the example of FIG. 5, the inference module 14 may infer individual electrical appliances 20 based on the event probabilities stored in the third storage 17. In an example, a value of electric power in the branch circuit 32 for living room is 350 [W] in a time period of 20:00 to 21:00 as shown in FIG. 6. In Table 1, examples of the case where the branch circuit 32 for living room is 350 [W] include the case where the electrical appliance 20 of the group G1 and the electrical appliance 20 of the group G2 are operated at the same time and the case where the electrical appliance 20 of the group G3 is operated. That is, there are two kinds of candidates, namely the case where a value of electric power of the group G1 is 100 [W] and a value of electric power of the group G2 is 250 [W], and the case where a value of electric power of the group G3 is 350 [W].

Focusing on the event probabilities, the groups G1 and G2 are 90% each and the group G3 is 50 %, in the time period of 20:00 to 21:00. The event probability that the electrical appliances 20 of the groups G1 and G2 are in operation at the same time is 90% $\times$ 90% = 81%. The event probability is higher than the event probability that only the electrical appliance 20 of the group G3 is in operation. The inference module 14 accordingly infers that the electrical appliances 20 of the groups G1 and G2 are in operation at the same time.

As stated above, the inference module 14 can obtain (a) candidates as (a) combinations of (an) electrical appliances 20 connected to each branch circuit 32 based on the pieces of information of the second storage 15, and an analyzed result by the analyzer 13 and an inferred result by the inference module 14, stored in the third storage 17. It is therefore possible to, even when two or more electrical appliances 20 are connected to a branch circuit 32 and in operation at the same time, infer candidates as combinations of the electrical appliances 20 also in consideration of event probabilities, thereby inferring the electrical appliances 20 in operation.

Incidentally, a kind of electrical appliance 20 and a time period(s) may cause a variation in a value of electric power thereof. It is estimated that for example, even when an air conditioner is set to the same temperature in the daytime and in the evening in summer, a value of electric power thereof in the daytime when an ambient temperature is high is larger than that in the evening when the ambient temperature falls. When two or more electrical appliances 20 are connected to a branch circuit 32, a value of electric power therein varies according to a state that the electrical appliances 20 are operated at the same time or a state that only one of the electrical appliances 20 is operated.

As shown in FIG. 1, it is therefore desirable that the appliance inference device 10 be provided with the input interface 19 that is configured, when a user or an external device can predict a value of electric power per time period for each of the branch circuits 32, to receive the predicted value. A value of electric power per time period received through the input interface 19 is stored in the third storage 17. Thus, in the case where a value of electric power predicted per time period is stored in the third storage 17, the inference module 14 infers (a) candidates as (a) combinations of (an) electrical appliances 20 corresponding to a value of electric power of a group based on combinations of values of electric power in time periods stored in the third storage 17. In this case, the inference module 14 is configured, when two or more kinds of candidates for an electrical appliance 20 are obtained, determine (an) candidates based on an event probability for each of time periods in each of which a corresponding value of electric power is consumed.

In a time period(s) in which two or more electrical appliances 20 operate at the same time, the inference module 14 can accurately infer that the electrical appliances 20 operate at the same time, based on a value of electric power predicted per time period. The inference module 14 can not only accurately infer the electrical appliances 20 that operate at the same time, but also infer a value of electric power consumed by each of the electrical appliances 20.

When a time period(s) requires suppressing electric power received in the main circuit 31, it is desirable that power consumption of an electrical appliance(s) 20 that operates in the time period(s) be suppressed based on the pieces of information stored in the third storage 17. In addition, an electrical appliance(s) 20 that consumes a large amount of electric power in the time period(s) can be found based on the pieces of information stored in the third storage 17. It is therefore possible to easily extract an electrical appliance(s) 20 as a target(s) for suppression of power consumption.

As stated above, the analyzer 13 can classify each value of electric power within the comparison time period as a group or a subgroup by analyzing a change in values of electric power for each of the branch circuits 32 stored in the first storage 12. The inference module 14 can infer a kind(s) of an electrical appliance(s) 20 to extract a name(s) of the electrical appliance(s) 20 from the second storage 15 by checking an analyzed result by the analyzer 13 with the pieces of appliance information stored in the second storage 15. Since the pieces of appliance information stored in the second storage 15 are set based on each specification of the electrical appliances 20, common knowledge, statistical data and the like, time-consuming setting for such information is rarely required for a user.

That is, the appliance inference device 10 of the embodiment infers a name(s) of an appliance(s) (an electrical appliance(s) 20) connected to an electrical circuit (a main circuit 31 or a branch circuit 32) based on a change in values of electric power in the electrical circuit connected to the appliance(s). The analyzer 13 therefore classifies, from the change in values of electric power, each value of electric power as a group corresponding to the appliance(s). The inference module 14 correlates each group with an element of the pieces of appliance information, which contains a range of values of electric power consumed by the appliance(s) and a time period(s) with a probability of operation of the appliance(s). As a result, the appliance inference device 10 can correlate appliances with respective groups and infer a name(s) of the appliance(s) connected to the electrical circuit. Each element of the pieces of appliance information contains a range of values of electric power consumed by a corresponding appliance and a time period(s) with a probability of operation of the appliance. Such pieces of appliance information can be obtained easily. In the appliance inference device 10, pieces of information required for inferring appliances can be easily stored.

A result inferred by the inference module 14 is output to a presentation device 42 through an output interface 18 provided for the appliance inference device 10. The presentation device 42 may have a dedicated configuration to the appliance inference device 10, or be provided separately from the appliance inference device 10. The inferred result by the inference module 14 is presented by the presentation device 42 whereby a user can easily know a name(s) of an electrical appliance(s) 20 connected to each of the branch circuits 32. If each of the branch circuits 32 is connected with an electrical appliance(s) 20, the inference module 14 can infer an electrical appliance(s) 20 in operation based on a value of electric power received in real time per branch circuit 32 by the receiver 11.

The presentation device 42 provided separately from the appliance inference device 10 may be configured to include a flat panel display such as a liquid crystal display device, for example. In order to allow a terminal device to function as the presentation device 42, the output interface 18 may be provided with an interface configured to communicate with the terminal device. Examples of such a terminal device include a personal computer, a smart phone, a tablet terminal and the like.

The appliance inference device 10 may be built in a controller of a HEMS (Home Energy Management System). A function of part of the appliance inference device 10 may be realized by a server (which may be a cloud server). The function of the server can be utilized through the terminal device.

The appliance inference device 10 can output a name(s) of an electrical appliance(s) 20 through the output interface 18. It is therefore possible to infer behavior of a user(s) in the building 40 based on the application of the electrical appliance(s) 20. For example, if the electrical appliance 20 is a microwave oven, it can be inferred that the user is cooking. If the electrical appliance 20 is a TV, it can be inferred that the behavior of the user is amusing or viewing TV The appliance inference device 10 extracts a group of values of electric power based on a change in values of electric power within the comparison time period, and correlates an electrical appliance(s) 20 with each of groups. Therefore, the appliance inference device 10 can simply infer a kind(s) of an electrical appliance(s) 20 connected to a branch circuit 32 without extracting various feature quantities per electrical appliance 20.

The aforementioned embodiment is one example of the invention. The invention is therefore not limited to the aforementioned embodiment, but may be other examples other than the embodiment, and numerous modifications may be made in accordance with design or the like without departing from the true spirit and scope of the invention.

**Claims**

1. An appliance inference device, comprising:

a receiver configured to receive, from a measuring device, values of electric power conducted in an electrical circuit that an electrically-powered appliance is connected to;

a first storage configured to store pieces of power information in each of which a value of electric power received by the receiver is correlated with a time;

an analyzer configured, when a piece of power information stored in the first storage satisfies a prescribed condition, to classify the piece of power information as a group corresponding to the condition;

a second storage configured to store appliance information

that contains a range of values of electric power to be consumed by the appliance, and a time period with a probability of operation of the appliance, and

that is correlated with a name of the appliance; and

an inference module configured to check the piece of power information classified as the group by the analyzer with the appliance information stored in the second storage, thereby inferring the name of the appliance corresponding to the group.

2. The appliance inference device of claim 1, wherein the analyzer comprises:

a statistics processor configured to calculate frequency distribution in relation to values of electric power contained in pieces of power information for a prescribed comparison time period, stored in the first storage;

a reference value adjuster configured to set a value of electric power, which is a maximum frequency in the frequency distribution, to a reference value; and

a classifier configured, when a difference between a value of electric power and the reference value is a threshold or less as said condition is satisfied, to classify the value of electric power as the group.

3. The appliance inference device of claim 2, wherein the classifier is configured,

when temporally adjoining first and second values are contained in time series values of electric power within the comparison time period and has a difference that is equal to or less than the threshold compared with the reference value, and a time difference between a time correlated with the first value and a time correlated with the second value is within a prescribed judgment time, as said condition is satisfied,

to classify the second value after the first value into a group that is identical with that of the first value.

4. The appliance inference device of claim 3, wherein

the electrical circuit includes branch circuits that diverge from a main circuit,

the measuring device is configured to measure a value of electric power for each of the branch circuits, and

the analyzer is configured to allow the threshold and the judgment time to be set for each of the branch circuits.

5. An appliance inference device of any one of claims 1 to 4, further comprising a third storage configured to store the group classified by the analyzer and the name of the appliance inferred by the inference module with the group correlated with the name.

6. The appliance inference device of claim 5, wherein the inference module is configured to calculate an event probability for each of time periods with reference to the group stored in the third storage to store the event probability in the third storage.

7. The appliance inference device of claim 6, wherein the inference module is configured to infer candidates as combinations of appliances correlated with a value of electric power corresponding to the group when inferring the name of the appliance corresponding to the group classified by the analyzer,

the inference module being also configured to, based on an event probability for each of the time periods, obtain a candidate with a maximum probability in one or more time periods corresponding to the value of electric power when different kinds of candidates are inferred.

8. The appliance inference device of claim 6, further comprising an input interface configured to receive a value of electric power predicted for each of the time periods with reference to the electrical circuit to store a value of electric power received for each of the time periods in the third storage,

wherein the inference module is configured to infer candidates as combinations of appliances correlated with a value of electric power corresponding to the group based on combinations of values of electric power for each of time periods when inferring the name of the appliance corresponding to the group classified by the analyzer,

the inference module being also configured to, based on an event probability for each of the time periods, obtain a candidate in one or more time periods corresponding to the value of electric power when different kinds of candidates are inferred.

9. A program, for allowing a computer to function as an appliance inference device of any one of claims 1 to 8.

**Amended claims under Art. 19.1 PCT**

1. (Amended) An appliance inference device, comprising:

a receiver configured to receive, from a measuring device, values of electric power conducted in an electrical circuit that an electrically-powered appliance is connected to;
a first storage configured to store pieces of power information in each of which a value of electric power received by the receiver is correlated with a time;
an analyzer configured, when a piece of power information stored in the first storage satisfies a prescribed condition, to classify the piece of power information as a group corresponding to the condition;
a second storage configured to store appliance information

that contains a range of values of electric power to be consumed by the appliance, and a time period with a probability of operation of the appliance, and
that is correlated with a name of the appliance; and

an inference module configured to check the piece of power information classified as the group by the analyzer with the appliance information stored in the second storage, thereby inferring the name of the appliance corresponding to the group, wherein
the analyzer comprises:

a statistics processor configured to calculate frequency distribution in relation to values of electric power contained in pieces of power information for a prescribed comparison time period, stored in the first storage;
a reference value adjuster configured to set a value of electric power, which is a maximum frequency in the frequency distribution, to a reference value; and
a classifier configured, when a difference between a value of electric power and the reference value is a threshold or less as said condition is satisfied, to classify the value of electric power as the group.

2. (Canceled)

3. (Amended) The appliance inference device of claim 1, wherein the classifier is configured,
when temporally adjoining first and second values are contained in time series values of electric power within the comparison time period and has a difference that is equal to or less than the threshold compared with the reference value, and a time difference between a time correlated with the first value and a time correlated with the second value is within a prescribed judgment time, as said condition is satisfied,
to classify the second value after the first value into a group that is identical with that of the first value.

4. The appliance inference device of claim 3, wherein
the electrical circuit includes branch circuits that diverge from a main circuit,
the measuring device is configured to measure a value of electric power for each of the branch circuits, and
the analyzer is configured to allow the threshold and the judgment time to be set for each of the branch circuits.

5. (Amended) An appliance inference device of any one of claims 1, 3 and 4, further comprising a third storage configured to store the group classified by the analyzer and the name of the appliance inferred by the inference module with the group correlated with the name.

6. The appliance inference device of claim 5, wherein the inference module is configured to calculate an event probability for each of time periods with reference to the group stored in the third storage to store the event probability in the third storage.

7. The appliance inference device of claim 6, wherein the inference module is configured to infer candidates as combinations of appliances correlated with a value of electric power corresponding to the group when inferring the name of the appliance corresponding to the group classified by the analyzer,

the inference module being also configured to, based on an event probability for each of the time periods, obtain a candidate with a maximum probability in one or more time periods corresponding to the value of electric power when different kinds of candidates are inferred.

8. The appliance inference device of claim 6, further comprising an input interface configured to receive a value of electric power predicted for each of the time periods with reference to the electrical circuit to store a value of electric power received for each of the time periods in the third storage,

wherein the inference module is configured to infer candidates as combinations of appliances correlated with a value of electric power corresponding to the group based on combinations of values of electric power for each of time periods when inferring the name of the appliance corresponding to the group classified by the analyzer,

the inference module being also configured to, based on an event probability for each of the time periods, obtain a candidate in one or more time periods corresponding to the value of electric power when different kinds of candidates are inferred.

9. (Amended) A program, for allowing a computer to function as an appliance inference device of any one of claims 1 and 3 to 8.

## FIG. 1

## FIG. 2

## FIG. 3

## FIG. 4

## FIG. 5

## FIG. 6

20

## INTERNATIONAL SEARCH REPORT

| International application No. |
| --- |
| PCT/JP2015/000037 |

**A. CLASSIFICATION OF SUBJECT MATTER**
*H02J13/00*(2006.01)i

According to International Patent Classification (IPC) or to both national classification and IPC

**B. FIELDS SEARCHED**

Minimum documentation searched (classification system followed by classification symbols)
H02J13/00

Documentation searched other than minimum documentation to the extent that such documents are included in the fields searched
Jitsuyo Shinan Koho        1922–1996   Jitsuyo Shinan Toroku Koho   1996–2015
Kokai Jitsuyo Shinan Koho  1971–2015   Toroku Jitsuyo Shinan Koho   1994–2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2009-257952 A  (Nippon Telegraph and Telephone Corp.),<br>05 November 2009 (05.11.2009),<br>paragraphs [0065] to [0081]; fig. 4 to 8<br>(Family: none) | 1,5,9<br>2-4,6-8 |
| A | JP 2012-168918 A  (Kazuaki NEBU),<br>06 September 2012 (06.09.2012),<br>paragraphs [0021], [0026] to [0028], [0035] to [0041]; fig. 1 to 4<br>(Family: none) | 1-9 |

☒ Further documents are listed in the continuation of Box C.    ☐ See patent family annex.

| * Special categories of cited documents: | |
| --- | --- |
| "A"  document defining the general state of the art which is not considered    to be of particular relevance | "T"  later document published after the international filing date or priority date and not in conflict with the application but cited to understand the principle or theory underlying the invention |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| 20 March 2015 (20.03.15) | 31 March 2015 (31.03.15) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
| --- | --- |

Form PCT/ISA/210 (second sheet) (July 2009)

**INTERNATIONAL SEARCH REPORT**

International application No.

PCT/JP2015/000037

C (Continuation). DOCUMENTS CONSIDERED TO BE RELEVANT

| Category* | Citation of document, with indication, where appropriate, of the relevant passages | Relevant to claim No. |
|---|---|---|
| A | JP 2012-168735 A (Fujitsu Social Science Laboratory Ltd.), 06 September 2012 (06.09.2012), paragraphs [0146] to [0152], [0164], [0165]; fig. 22 (Family: none) | 1-9 |
| A | WO 2013/080619 A1 (Panasonic Corp.), 06 June 2013 (06.06.2013), paragraphs [0033] to [0049]; fig. 3, 4 & US 2014/0222230 A1 & EP 2746787 A1 | 1-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012175900 A